# EUROPEAN PATENT APPLICATION

(11) **EP 1 671 904 A1**
(43) Date of publication of application: **21.06.2006**
(21) Application number: 04257784.1
(22) Date of filing: 15.12.2004
(51) Int. Cl.: B65G 47/28, B65G 51/03

(54) **Conveyor**

(71) Applicant: Crown Packaging Technology Inc, Alsip, IL 60803-2599 (US)
(72) Inventor: Powell, Andrew Ivor, Berkshire RH19 3YX (GB)
(74) Representative: Parry, Christopher Stephen

(57) **Abstract**

An air conveyor for a single stream of items (5) comprises an upstream end (1) and a downstream end (2). Monitoring means (8) are provided for monitoring the separation of items in a first designated section (7) of the stream and control means (9) are provided for controlling the flow of items over a second section of the stream upstream of the designated section. The control means (9) is responsive to item separation in the designated section (7) of the stream as monitored by the monitoring means (8) to maintain item separation in the designated section (7) at a desired level.

## Description

The invention relates to a conveyor for a single stream of items where the items form an unbroken stream over a downstream portion and over an upstream portion of the stream. If the stream is unbroken over its whole length, any disturbance at the downstream end will send a pulse back through the stream to the upstream end. This can cause serious damage to the items being conveyed.

The term "unbroken stream" is used to mean a stream in which the items are in contact with one another such that there are substantially no spaces between adjacent items.

The invention provides a method and apparatus for providing and controlling a spacing between items over a designated section of the conveyor. Any pulse moving backwards through the stream from the downstream end is thus dissipated in the designated section.

According to one aspect, the invention provides a conveyor for a single stream of items comprising an upstream end and a downstream end; monitoring means for monitoring the separation of items in the stream in a first designated section of the conveyor; and control means for controlling the rate of flow of items over a second section of the conveyor upstream of the first section; said control means being operative in response to item separation in the first section of the conveyor as monitored by the monitoring means to maintain item separation in the designated section at a desired level.

According to another aspect, the invention provides a method of controlling a single stream of items on a conveyor in which the items form an unbroken stream over a downstream portion of the conveyor and over an upstream portion of the conveyor; the method comprising the steps of: generating a spacing between items in a designated section of the conveyor between the downstream portion and the upstream portion; monitoring the spacing of items in the designated section of the conveyor; and controlling the rate of flow of items entering the designated section of the conveyor to maintain a desired spacing between items in the designated section of the conveyor.

An embodiment of the invention is described below with reference to the accompanying drawings in which:
Figure 1 is a side view of a conveyor;
Figure 2 is an enlarged view of a portion of the conveyor of Figure 1; and
Figure 3 is a diagrammatic view of a section of a conveyor.

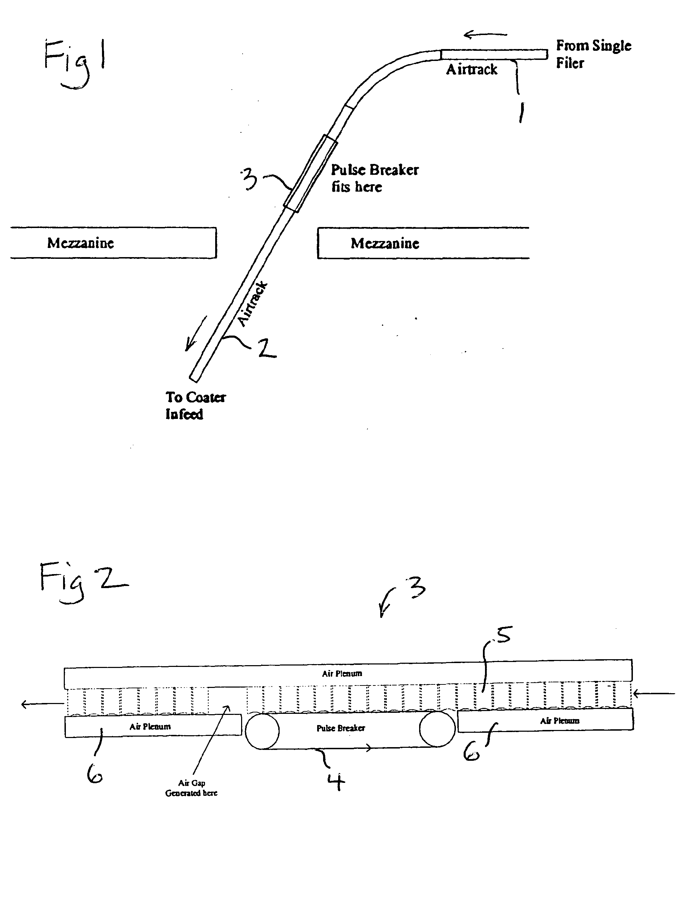

Figure 1 shows an air conveyor of the type known as an airtrack conveyor on which items (5) are supported and conveyed by air supplied from air plenums (6) on at least two sides of the conveyor. The conveyor shown includes an upper horizontal portion 1 leading into a downwardly inclined portion 2. The downwardly inclined portion includes a section 3 in which an air plenum of the airtrack conveyor has been replaced by a section of belt conveyor 4.

The apparatus has been designed for conveying metal cans 5 and if steel cans are conveyed they may be held on the belt conveyor 4 by magnetism or electromagnetism. If non-steel cans or other non-magnetic items are being conveyed they may be held on the belt conveyor by other means such as vacuum or mechanical devices (not shown).

Because the items being conveyed are firmly held on the belt conveyor, the rate at which they leave the belt conveyor can be controlled by controlling the speed of the belt.

Cans are supplied to the belt conveyor 4 in an unbroken stream in single file from the upstream end of the airtrack conveyor. At the downstream end of the airtrack conveyor, the cans are delivered to the infeed of a coater or other piece of process apparatus (not shown). Upstream of the coater, the cans 5 form an unbroken stream up to a point just below the belt conveyor 4.

In order to avoid the condition where the cans form an unbroken stream over the whole length of the airtrack conveyor, a spacing between cans is generated just below the belt conveyor 4. The length of airtrack conveyor over which spacing occurs depends on different configurations and running speeds but a length equivalent to eight items (cans) has been found useful in one application. The section of the airtrack conveyor stream over which items are spaced apart forms a buffer zone or pulse breaker which dissipates any destructive pulse moving back up the conveyor from a disturbance caused at the downstream end.

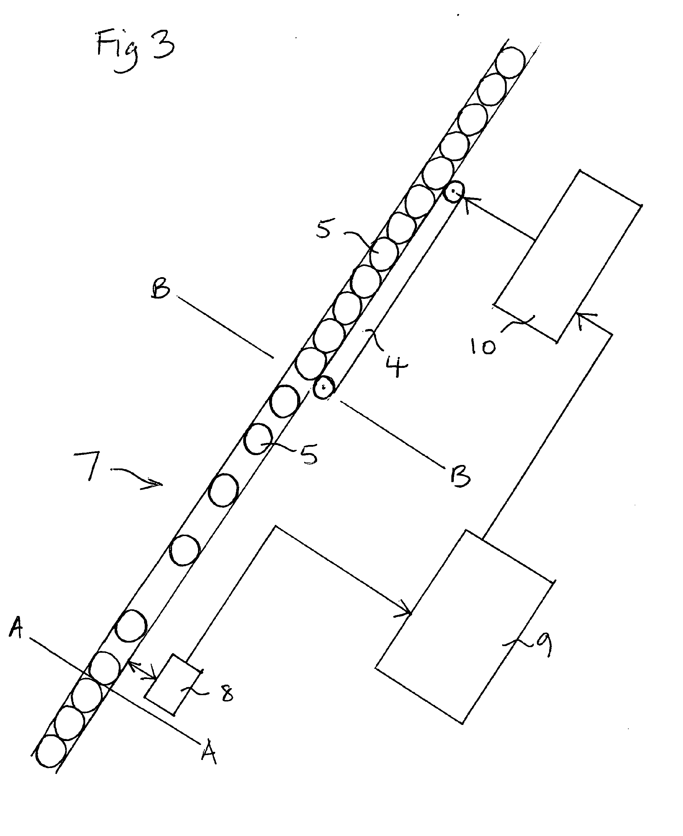

Operation of the airtrack conveyor will be described with reference to Figure 3 in which the items 5 being conveyed are shown diagrammatically. The stream of items is unbroken downstream of line AA and upstream of line BB. In a designated section 7 between the two lines, the items 5 are spaced. In a steady state condition the items above the line BB are conveyed at the same speed as the items below the line AA and the belt conveyor 4 runs at this speed. Over the section 7 between the lines BB and AA the items accelerate slightly to catch up with the unbroken stream in front of them.

A monitoring device 8 monitors the separation of items 5 in the designated section 7 and sends a signal to a control means 9 which in turn controls the speed of the belt conveyor through a servomotor 10 .

If the separation monitored detects that the spaced section of stream is not maintained as required, the belt conveyor 4 is slowed to increase separation. Conversely, if the monitoring means detects too great a spaced section of stream, the belt conveyor 4 is speeded up as required.

## Claims

1. A conveyor for a single stream of items comprising an upstream end and a downstream end;
monitoring means for monitoring the separation of items in the stream in a first designated section of the conveyor;
and control means for controlling the rate of flow of items over a second section of the conveyor upstream of the first section;
said control means being operative in response to item separation in the first section of the conveyor as monitored by the monitoring means to maintain item separation in the designated section at a desired level.

2. A conveyor as claimed in claim 1 wherein the conveyor is an air conveyor and where the control means comprises a section of driven conveyor fitted into the air conveyor and driven by a servo motor controlled in response to the monitoring means.

3. A conveyor as claimed in claim 2 wherein the driven conveyor is a belt conveyor and the items are held on the belt conveyor by magnetic, vacuum electromagnetic or mechanical devices.

4. A method of controlling a single stream of items on a conveyor in which the items form an unbroken stream over a downstream portion of the conveyor and over an upstream portion of the conveyor; the method of comprising the steps of:
generating a spacing between items in a designated section of the conveyor between the downstream portion and the upstream portion;
monitoring the spacing of items in the designated section of the conveyor;
and controlling the rate of flow of items entering the designated section of the conveyor to maintain a desired spacing between items in the designated section of the conveyor.

5. A method as claimed in claim 4, wherein the items are accelerated over the designated section of the conveyor to catch up with the unbroken downstream portion of the conveyor.

6. A method as claimed in claim 4 or claim 5, wherein at least a part of the designated section of the conveyor is downwardly inclinded.
